# EUROPEAN PATENT SPECIFICATION

(11) **EP 3 862 288 B1**
(45) Date of publication and mention of the grant of the patent: **11.10.2023**
(21) Application number: 21156108.9
(22) Date of filing: 09.02.2021
(51) Int. Cl.: B65D 63/16, F16G 11/10, F16G 11/12

(54) **AN ELONGATE STRIP AND AN ADAPTER FOR USE WITH THE ELONGATE STRIP, AND METHOD**
LÄNGLICHER STREIFEN UND ADAPTER ZUR VERWENDUNG MIT DEM LÄNGLICHEN STREIFEN, UND VERFAHREN
BANDE ALLONGÉE ET ADAPTATEUR À UTILISER AVEC LA BANDE ALLONGÉE, ET PROCÉDÉ

(30) Priority: 10.02.2020 GB 202001809
(43) Date of publication of application: 11.08.2021
(73) Proprietor: Slater, Nigel, Walsall, West Midlands WS8 6DP (GB)
(72) Inventor: Slater, Nigel, Walsall, West Midlands WS8 6DP (GB)
(74) Representative: Forresters IP LLP

(56) References cited:
- GB-A- 2 465 225
- US-B1- 6 507 979

## Description

The present invention relates to an adaptor for use with an elongate strip and a method of using the same.

A cable tie or zip tie is a fastener having a flexible tail with an integrated ratchet gear rack along its length and an end member located at one end of the tail defining a through-hole and carrying a pawl member. In use, the tail is looped around one or more items (e.g. cables) and an end thereof is passed through the through-hole, such that the pawl member engages with the ratchet gear rack. The ratchet gear rack and pawl are configured such that the loop formed by the tail can be tightened but loosening is hindered or substantially prevented.

Originally designed for use in the aircraft industry, cable ties have seen widespread adoption across industries due to their low cost per unit and ease of use. Whilst often used to secure, or create bundles of, cables, cable ties are also used for many other applications. Particularly common use of cable ties can be found in the automotive industry to secure wiring looms within vehicles.

In use, once tightened, a length of the tail which does not form a loop for securing items generally extends from the end member and is redundant (i.e. a length of the tail forms a redundant tail portion). In some instances, these redundant tail portions can be unsightly and may interfere with the positioning of the secured item held by the cable tie or one or more adjacent items.

It is common practice, therefore, for these redundant tail portions to be cut off and discarded. This practice creates a relatively large amount of waste. Indeed, in some instances, it is the majority of the tail which forms the redundant tail portion and, therefore, most of the tail is discarded.

The tail of a cable tie is typically made from a plastics material. The discarding of plastics materials is problematic due, for example, to the environmental impact of plastics material waste.

Some cable ties are formed from a plastics material which can be readily melted and reformed to create new items. However, this still requires the collection, transportation, and treatment of the redundant tail portions. This is often cost prohibitive and/or the environmental impact of this process can itself be significant. This is particularly true for items such as cable ties - for which the users are numerous, varied, and spread over wide geographical areas.

For example, a common user of cable ties includes mechanics' garages and other workshops, of which there are many thousands spread across a large area and, individually, only generate a relatively small volume of waste plastics material.

Furthermore, as cost per unit is one of the driving factors of using cable ties, there is a desire to minimise costs. However, little consideration has been given to the majority of each cable tie being discarded and only a relatively small part of each cable tie being used. This is, therefore, not only wasteful in terms of material but also financially.

Cable ties are typically single-use items. In other words, once used once, the cable tie is cut and discarded when no longer needed and then replaced with a new cable tie if required.

Re-useable cable ties do exist but cannot be used in all instances in which single-use cable ties are used - e.g. because redundant tail portions still pose a problem, re-useable cable ties are more expensive typically, cable ties (in general) have a limited operable lifespan, and re-useable cable ties can be awkward to operate.

GB2465225 discloses an elongate tie adapted for both ends to be inserted into a capture means for self capturing engagement therewith. The capture device is independent of the tie thus increasing the usage and cutting out waste, i.e. on a conventional tie the length is premade. The tie can be metres long, or cm short. The capture device can be reused; once ties are cut free the tie can be pulled though the capture device (allowing it to be reused). The tie can be also reused once cut and pulled though the capture device. The capture device may have a pair of resiliently mounted pawls to engage with teeth on the tie providing ratchet and pawl self capturing. Preferably the tie is so formed that it will not readily twist.

US6507979 discloses a flexible tie comprising a flexible strap having a head portion and an opposing end portion. The head portion of the strap includes first and second slots. A dual-loop restraining device is formed using two straps by inserting the end portion of each strap through the first and second slots in the other strap. In use, the loops are tightened around a prisoner's arms or legs to restrain the prisoner's movement.

There is a need, therefore, to reduce waste and/or needless expense in relation to the provision and use of cable ties.

Embodiments of the present invention seek to alleviate one or more problems associated with the prior art.

Aspects of the present invention are recited by the independent claims, with the dependent claims reciting optional features.

Accordingly, an aspect provides an elongate strip and an adaptor for use with the elongate strip, according to claim 1.

The retaining element may include: a further pawl formed from a metal.

The retaining element may include the further pawl, the elongate strip may include an integrated ratchet gear rack, and the first and further pawl may be configured to engage the integrated ratchet gear rack.

The first pawl may be located within the first through-hole and the further pawl is located within the second through-hole.

The main body and first pawl may be integrally formed.

The main body and first pawl may be formed from a plastics material.

The first pawl may be formed from a metal.

The main body may be formed from a plastics material.

The elongate strip may be part of a cable tie.

Another aspect provides a method according to claim 7.

Providing the elongate strip may include providing a cable tie including an end member defining a through-hole and a tail portion, severing at least part of the tail portion from the end member and using the severed portion of the tail as the elongate strip.

The retaining element may include: a further pawl formed from a metal.

The retaining element may include the further pawl and the elongate strip may include an integrated ratchet gear rack, and wherein the method may further include engaging the first and further pawls with the integrated ratchet gear rack.

The first pawl may be located within the first through-hole and the further pawl may be located within the second through-hole.

The main body and first pawl may be integrally formed.

The main body and first pawl may be formed from a plastics material.

The first pawl may be formed from a metal.

The main body may be formed from a plastics material.

Embodiments of the present invention are described, by way of example only, with reference to the accompanying drawings, in which:
Figure 1 shows a cable tie of the prior art;
Figure 2 shows a redundant tail portion;
Figures 3-6 an embodiment of an adaptor;
Figures 7 and 8 show the embodiment of figures 3-6 in use; and
Figures 9-12 show an adaptor which is not according to the invention.

Embodiments include a cable tie adaptor 100 for use with a cable tie 1 or zip tie 1.

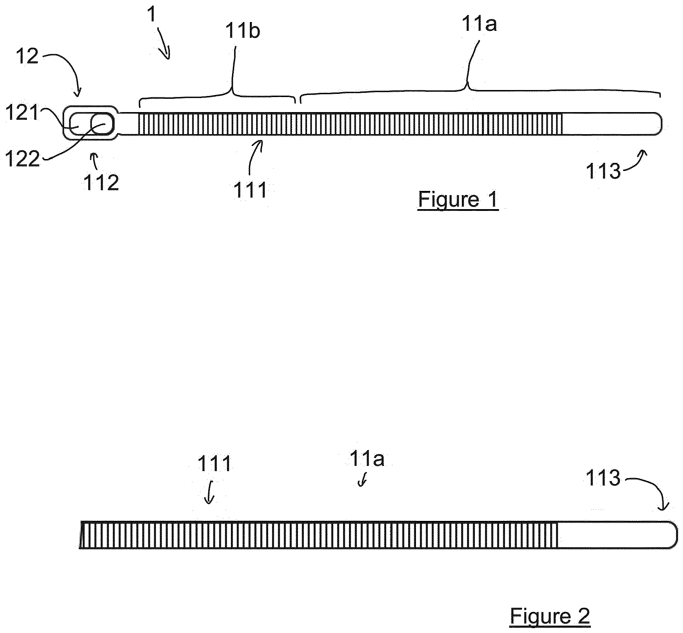

With reference to figure 1, herein the terms "cable tie" 1 and "zip tie" 1 are used interchangeably to refer to a fastener having a flexible tail 11 with an integrated ratchet gear rack 111 along at least a portion of its length and an end member 12 located at one end of the tail 11. The end member 12 defines a through-hole 121 and carrying a pawl member 122. The pawl member 122 is configured to engage with the integrated ratchet gear rack 111 of the flexible tail 11. In use, therefore, the tail 11 is looped around one or more items (e.g. cables) and an end thereof is passed through the through-hole 121, such that the pawl member 122 engages the integrated ratchet gear rack 111. The integrated ratchet gear rack 111 and pawl member 122 are configured such that the loop formed by the tail 11 can be tightened but loosening is hindered or substantially prevented. In other words, the tail 11 may pass through the through-hole 121 with the pawl member 122 sliding over surfaces of the integrated gear rack 111 in a first direction but movement of the tail 11 through the through-hole 121 in a second direction (opposite to the first direction) will cause the pawl member 122 to engage a surface of the gear rack 111 to inhibit or substantially prevent further movement of the tail 11 through the through-hole 121 in the second direction. Such cable ties 1 are known.

The cable tie 1 is typically formed from a plastics material and, in some prior art cable ties 1, the entire cable tie 1 is formed from a plastics material. In some such cable ties, the pawl member 122 may be formed from metal.

The precise form of the cable tie 1 may vary and different variations on this basic design are known. For example, the tail 11 may be in the form of a flexible tape (as depicted) and one of the larger surfaces of that tape may carry the integrated ratchet gear rack 111 (the opposing larger surface of the tape may be substantially smooth). As will be appreciated, a tape has two larger surfaces separated by a depth of the tape, such that the tape has a generally rectangular cross-sectional shape. In such embodiments, the through-hole 121 may, therefore, be generally rectangular in shape and is sized to receive at least part of the tape.

Other cable ties 1 may have a tail 11 which is square, triangular, or circular (for example) in cross-sectional shape and the through-hole 121 may be of a corresponding shape.

Some embodiments may include, in addition to the adaptor 100 for example, a cable tie 1 as described herein (or even a plurality of such cable ties 1).

In use, at least a portion 11a of the tail 11 of the cable tie 1 may be cut or otherwise severed from the remainder of the cable tie 1. Typically, this portion 11a is a part of the tail 11 which has passed through the through-hole 121 and which is not used to form a loop to secure an item (such as a cable). This portion of the tail 11 will herein be referred to as the redundant tail portion 11a - see figure 2. As will be appreciated, the remainder of the tail 11 may be referred to as the retained tail portion 11b and it is the retained tail portion 11b (or at least part thereof) which is used to form a loop to secure an item and the end member 12 is typically integrally formed with the retained tail portion 11b.

A length of the redundant tail portion 11a may vary from one example to another - depending on the particular use of the cable tie 1 and where, along its length, the tail 11 was cut. Likewise, the size of the loop formed using the retained tail portion 11b will also vary from one example to another.

The redundant tail portion 11a would, prior to the present invention, typically have been discarded.

The adaptor 100 of embodiments is configured, however, to allow the re-use of the redundant tail portion 11a to secure one or more items.

The redundant tail portion 11a may be in the form of an elongate member (e.g. a tape) and includes an integrated ratchet gear rack 111 (which may be a portion of the integrated ratchet gear rack 111 of the cable tie 1 of which the redundant tail portion 11a may have once been a part).

The redundant tail portion 11a may, therefore, have a first end 112 and a second end 113 (the first and second ends 112,113 opposing each other across a length of the redundant tail portion 11a).

In some embodiments, the first end 112 of the redundant tail portion 11a is a severed end and may once have been connected to the retained tail portion 11b of a cable tie 1. The second end 113 may be an original end piece of the tail 11 of a cable tie 1 or may be a severed end as well, for example.

In some embodiments, the second end 113 may be tapered. In some embodiments, the second end 113 may include a rounded distal part.

At least part of the length of the redundant tail portion 11a includes an integrated ratchet gear rack 111 and this may be a length which extends from the first end 112 towards the second end 113. The integrated ratchet gear rack 111 may extend from the first end 112 to the second end 113, or may extend from the first end 112 along only a part of the distance to the second end 113.

The integrated ratchet gear rack 111 may be located on a first surface of the redundant tail portion 11a. A second surface of the redundant tail portion 11a may oppose the first surface across a depth thereof. These first and second surfaces may be the larger surfaces of a redundant tail portion 11a in the form of a tape, for example (i.e. with a rectangular cross-sectional shape). The second surface may be substantially smooth, for example.

The integrated ratchet gear rack 111 may include a plurality of teeth and the teeth may be of a saw-toothed configuration. The integrated ratchet gear rack 111 may include a plurality of detents which may be in the form of respective recesses or through-holes. The integrated ratchet gear rack 111 may include one or more ribs and/or bumps.

The distal part of the second end 113 (i.e. a part most remote from the first end 112) may have a substantially smooth first surface (and may have a substantially smooth second surface). This may aid in insertion of this end into the through-hole of the cable tie 1, for example.

Thus, the redundant tail portion 11a may be considered to be an elongate member carrying an integrated ratchet gear rack 111.

The redundant tail portion 11a may have no integrated pawl to engage the integrated ratchet gear rack 111 thereof. A cross-sectional shape and size of the redundant tail portion 11a may be substantially uniform along an entire length thereof. A cross-sectional shape and size may not exceed the shape and size of a part of the redundant tail portion 11a which includes the integrated ratchet gear rack 111 (e.g. the second end 113 may taper compared to the first end 112 and the first end 112 may be a part which carries the integrated ratchet gear rack 111). As will be appreciated, substantially uniform in this instance includes variations formed by the integrated ratchet gear rack 111. The redundant tail portion 11a may be such that its entire length could pass through the through-hole 121 of a cable tie 1 (and that cable tie 1 may be of a type, size and form as a cable tie 1 of which the redundant tail portion 11a was once a part).

Thus, the redundant tail portion 11a may be generally considered to be an elongate strip 11a (having an integrated ratchet gear rack 111 along a length thereof, which may or may not be an entire length thereof). Whilst embodiments are generally described on the basis of this elongate strip 11a being a severed redundant tail portion 11a of a cable tie 1 (i.e. the redundant tail portion 11a), it is envisaged that the elongate strip 11a may be of the above described form but never have been part of a cable tie 1. The elongate strip 11a may be formed from a plastics material.

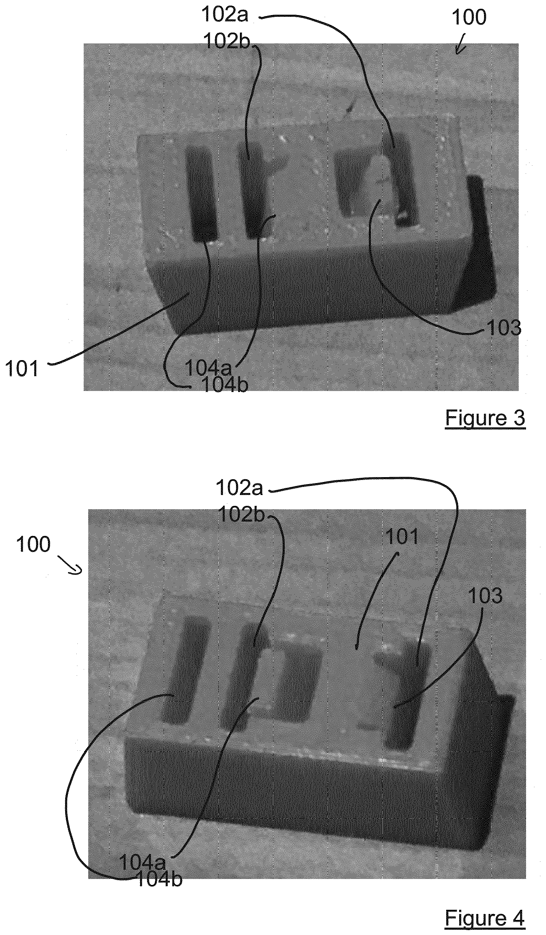

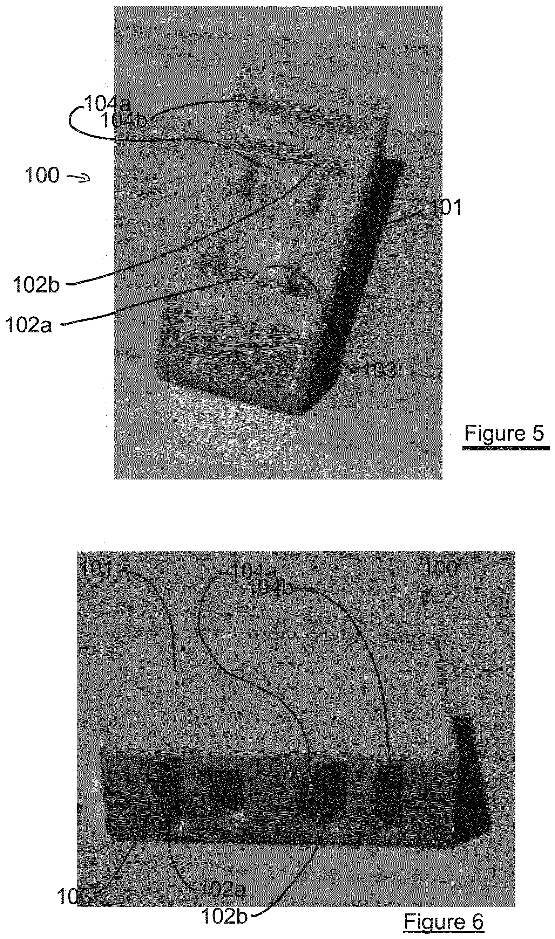

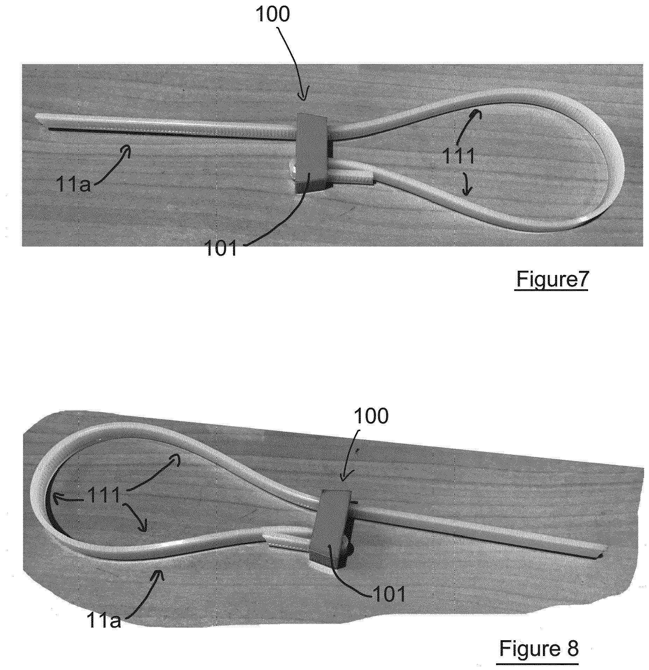

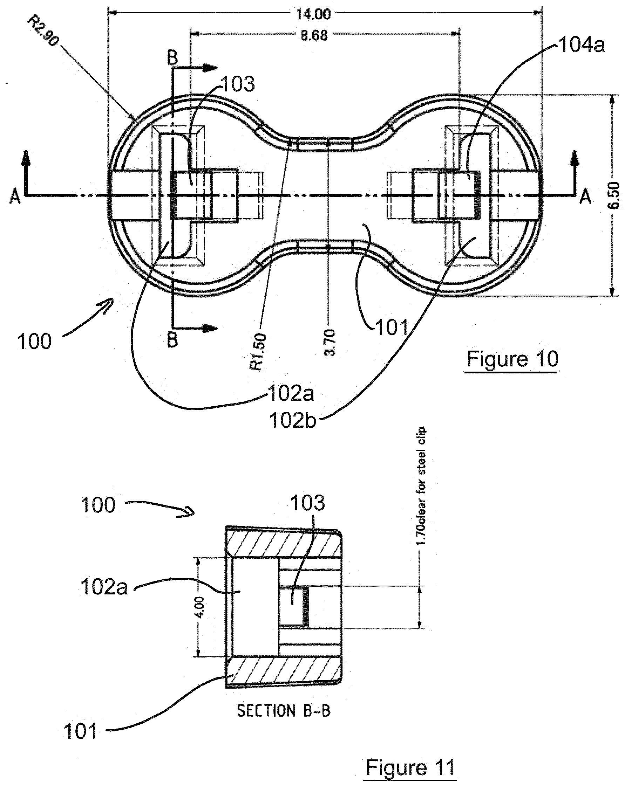

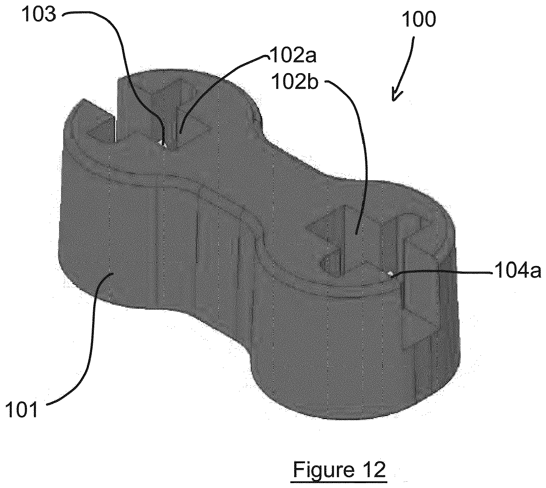

The adaptor 100 of embodiments includes a main body 101 - see figures 3-16. The main body 101 defines two or more through-holes 102a,b, each through-hole 102a,b of the two or more through-holes 102a,b is configured to receive at least a part of the elongate strip 11a. A first 102a of the two or more through-holes 102a,b may be associated with a pawl member 103.

The two or more through-holes 102a,b may each be configured to receive at least a part of the elongate strip 11a including the integrated ratchet gear rack 111 and the pawl member 103 of the first 102a of these two or more through-holes 102a,b is configured to engage the integrated ratchet gear rack 111.

The pawl member 103 may be configured in this engagement to permit the movement of the elongate strip 11a through the through hole 102a in a first direction but to substantially inhibit or prevent movement in a second direction (opposing the first direction) through the through-hole. Thus, the elongate strip 11a (or a part thereof) may pass through the first through-hole 102a in the first direction (but cannot pass through the first through-hole 102a in a second direction). In some embodiments, the engagement is such that the elongate strip 11a (or a part thereof) may pass through the first through-hole 102a in both first and second directions but a threshold resistive force must be overcome to permit such movement - wherein the threshold resistive force is higher than a required force to retain an item in the loop formed by the elongate strip 11a and adaptor 100, for example.

A second 102b of the two or more through-holes 102a,b may be configured for use in securing the elongate strip 11a with respect to the adaptor 100. This securing may be such that the elongate strip 11a is held at a substantially fixed location along the length of the elongate strip 11a (and cannot move in a first or second direction with respect to the adaptor 100) or may be such that the elongate strip 11a can only move through the second through-hole 102b in one direction (e.g. a first direction), movement therethrough in the second direction being substantially inhibited or prevented. In some embodiments, this securing is such that the elongate strip 11a can move in the first or second direction through the second through-hole 102b but a threshold resistive force must be overcome to permit such movement - wherein the threshold resistive force is higher than a required force to retain an item in the loop formed by the elongate strip 11a and adaptor 100, for example.

The threshold resistive forces may be manual forces.

This function of the second through-hole 102b can be achieved through a number of different possible configurations.

Accordingly, in some embodiments, the adaptor 100 includes a retaining element 104a,b associated with the second through-hole 102b. In some embodiments, the retaining element 104a,b includes at least one further pawl member 104a.

The further pawl member 104a may be configured to engage the integrated ratchet gear rack 111. The further pawl member 103 may be configured in this engagement to permit the movement of the elongate strip 11a through the second through-hole 102b in a first direction but to substantially inhibit or prevent movement in a second direction (opposing the first direction) through the through-hole 102b. Thus, the elongate strip 11a (or a part thereof) may pass through the second through-hole 102b in the first direction (but cannot pass through the second through-hole 102b in a second direction). In some embodiments, the engagement is such that the elongate strip 11a (or a part thereof) may pass through the second through-hole 102b in both first and second directions but a threshold resistive force must be overcome to permit such movement - wherein the threshold resistive force is higher than a required force to retain an item in the loop formed by the elongate strip 11a and adaptor 100, for example.

In some embodiments, the pawl members 103,104a may be arranged to engage different parts of the same integrated gear rack 111 of the same elongate strip 11a. In some embodiments, the pawl members 103,104a are arranged to engage different parts of the same integrated gear rack 111 of the same elongate strip 11a with that elongate strip 11a and the adaptor 100 forming a loop to fit around (e.g. secure to) an item (e.g. a cable). In some embodiments, the pawl members 103,104a are arranged to engage different parts of the same integrated gear rack 111 of the same elongate strip 11a with that elongate strip 11a and the adaptor 100 forming a loop to fit around (e.g. secure to) an item (e.g. a cable) and the elongate strip 11a is not axially twisted in the loop.

The pawl members 103,104a may be integrally formed with the main body 101 or may be fitted to the main body 101. The pawl members 103,104a may be formed from a plastics material or a metal (such as steel). Each pawl member 103,104a may be configured to move, in a resiliently biased manner, between an at rest position and a retracted position such that the pawl 103,104a can allow movement of the integrated ratchet gear rack 111 with respect thereto in the manners described herein. In some embodiments, the or each pawl member 103,104a is a respective elongate piece with an angle of extension which is perpendicular to a central longitudinal axis of its associated through-hole 102a,102b. In some embodiments, the angle of extension is inclined with respect to the central longitudinal axis of the associated through-hole 102a,102b - and, in some such embodiments, the pawl members 103,104a (where two are provided) extend in generally opposing directions - i.e. towards opposing sides of the adaptor 100 - and/or may extend towards a top and a bottom of the adaptor 100 respectively.

The through-hole 102a,102b where associated with a respective pawl member 103, 104a may include portions which allow for deflection of that pawl member 103,104a.

According to the invention, the retaining element 104a,b includes a further (i.e. third) through-hole 104b (see figures 3-8, for example), which may be defined by the main body 101 of the adaptor 100 for example. The further through-hole 104b may be arranged with respect to the second through-hole 102b such that the elongate strip 11a can pass through both the second and third through-holes 102b,104b and the elongate strip 11a between these two through-holes (i.e. the second and third through-holes 102b,104b) may be held closely to the main body 101 - i.e. adjacent. Accordingly, this part of the elongate strip 11a may form a U-shape and this may be in close proximity to the main body 101. Accordingly, the second and third through-holes 102b,104b may be generally parallel with respect to each other, through the main body 101. The second and third through-holes 102b,104b may be spaced apart from each other by less than about 2mm, or less than about 1mm. In some embodiments the third through hole 104b is located outboard in the main body 101 with respect to the first through hole 102a and second through-hole 102b.

The first and second through-holes 102a,102b may be more than 1mm apart, more than about 2mm apart, more than about 3mm apart, more than about 4mm apart, or more than about 5mm apart. The first and second through-holes 102a,102b may be parallel with respect to each other.

The main body 101 may consist of (i.e. comprise only) the first and second through-holes 102a,b, the first pawl member 103, and the retaining element 104a,b. The main body 101 does not include an elongate strip of its own - i.e. it is not integrally formed with an elongate strip 11a having an integrated ratchet gear rack 111 (e.g. which is configured (such as by virtue of its length and/or width) to be inserted into one of the first and second through-holes 102a,b of the same adaptor 100). According to the invention, there is no elongate strip integrally formed with the adaptor.

Turning more specifically to figures 3-8, there is shown a first embodiment of the adaptor. This embodiment and variations thereof are now described with reference to the above explanation concerning these and other embodiments.

The main body 101 may have a generally rectangular cross-section and may taper from a bottom towards a top surface thereof (although the tapering many not be present in all embodiments).

The main body 101 defines the first through-hole 102a, the second through-hole 102b, and the further (third) through-hole 104b. The first through-hole 102a may be located towards a first end of the main body 101, the third through-hole 104b may be located towards an opposing second end of the main body 101 and the second through-hole 102b may be located between the first and third through-holes 102a, 104b. The first and second through-holes 102a,102b may be generally parallel with respect to each other. The third through-hole 104b may also be parallel with the first and/or second through-holes 102a,b.

The first through-hole 102a is associated with a first pawl member 103 which is located within the first through-hole 102a. The first pawl member 103 is inclined with respect to a central longitudinal axis of the first through-hole 102a. The first pawl member 103 may be integrally formed with the main body 101. The first pawl member 103 may be cantilevered from a first end which is located generally towards the top surface such that a space between the first pawl member 103 and an opposing surface of the main body 101 decreases towards the bottom surface of the main body 101 (that space being configured to receive at least part of the elongate strip). The first through-hole 102a may include a recess located behind the first pawl member 103 to permit the first pawl member 103 to move resiliently away from the opposing surface of the main body 101. This recess may be visible from the bottom of the main body 101.

The second through-hole 102b is associated with the retaining element 104a,b which includes the further pawl member 104a which is located within the second through-hole 102b. The further pawl member 104a is inclined with respect to a central longitudinal axis of the second through-hole 102b. The further pawl member 104a may be integrally formed with the main body 101. The further pawl member 104a may be cantilevered from a first end which is located generally towards the bottom surface such that a space between the further pawl member 104a and an opposing surface of the main body 101 decreases towards the top surface of the main body 101 (that space being configured to receive at least part of the elongate strip). The second through-hole 102b may include a recess located behind the further pawl member 104a to permit the further pawl member 104a to move resiliently away from the opposing surface of the main body 101. This recess may be visible from the top of the main body 101.

The first pawl member 103 and further pawl member 104a may, for example, extend generally towards the first and second ends of the main body 101 respectively.

The adaptor 100 includes the third through-hole 104b as part of the retaining element 104a,b. The third through-hole 104b is located between the second end of the main body 101 and the second through-hole 102b. The third through-hole 104b may have a generally rectangular cross-section or any cross-section corresponding with that of the elongate strip 11a with which the adaptor 1 is intended for use.

The third through-hole 104b does not include a pawl member.

The adaptor 100 does not include integrally formed elongate strips. It may be said, therefore, that the adaptor 100 consists of a main body 101 defining apertures 102a,102b, the first pawl member 103, and the retaining element 104a,b (which may include a further pawl member 104a) which includes the third through-hole 104b.

It will be understood from the present description that the retaining element 104a,b includes (i) the third through-hole 104b (and no further pawl 104a) or (ii) the further pawl 104a and the third through-hole 104b.

The retaining element 104a,b may, therefore, be regarded as a retaining system, retaining mechanism, or retaining configuration and all of these terms of used synonymously.

The elongate strip 11a may be inserted through the second through-hole 102b with the integrated ratchet gear rack 111 facing the further pawl member 104a (if provided) until a portion of the elongate strip 11a extends therethrough. If a further pawl 104a is provided, then this may move resiliently over the integrated ratchet gear rack 111 during this process. The action of the further pawl 104a against the integrated ratchet gear rack 111 may help to hold the adaptor 1 in place along a length of the elongate strip 11a during the next phase of use. In this next phase, an end of the elongate strip 11a may be passed through the third through-hole 104b if provided, for example. This secures the adaptor to the elongate strip 11a and defines a free end of the elongate strip 11a. This free end may be passed through the first through-hole 102a to form the loop to secure an object (such as a cable). The free end may be inserted into the first through-hole 102a with the integrated ratchet gear rack 111 facing the first pawl member 103 until the loop is formed. The first pawl 103 may move resiliently over the integrated ratchet gear rack 111 during this process. The action of the first pawl 103 and integrated ratchet gear rack 111 permit the closing (i.e. tightening) of the loop but substantially prevent or inhibit its opening (i.e. loosening).

In some embodiments, however, the insertion of the elongate strip 11a through the various through-holes 102a, 102b, 104b may be changed - for example through the third through hole 104b first, then through the second through-hole 102b, and then through the first though-hole 102a.

The loop may, in any event, be tightened by pulling on the free end.

This enables the re-use of redundant tail portions 11a, for example.

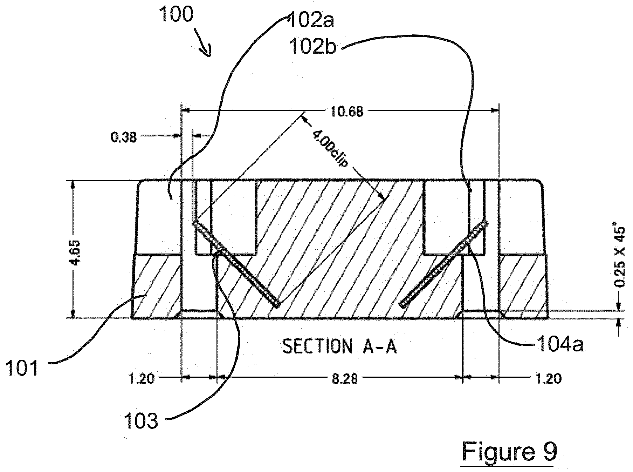

Turning more specifically to figures 9-12, there is shown an adaptor, which is not part of the invention, wherein Z the retaining element 104a,b does not include a third through-hole 104b.

The main body 101 may have a cross-section shape which is generally rectangular but with a bulbous first end and a bulbous second end. The two bulbous ends being interconnected by a narrower neck section.

The first through-hole 102a may be defined through the bulbous first end and the second through-hole 102b may be defined through the bulbous second end.

The first through-hole 102a may be associated with the first pawl member 103, which may be located therein. The first pawl member 103 may be formed from a metal (such as steel) - with a free end and an end embedded within the main body 101.

The second though-hole 102b may be associated with the retaining element 104a,b in the form of the further pawl member 104a which may be located in the second through-hole 102b. The further pawl member 104a may be formed from a metal (such as steel) - with a free end and an end embedded within the main body 101.

The first and further pawl members 103,104a may extend towards respective first and second ends of the main body 101 (i.e. outwardly) and may be inclined with respect to a central longitudinal axis of their respective through-hole 102a,102b (and may both extend towards the top of the main body 101) - see figure 19, for example). In some embodiments, the first and further pawl members 103,104a may extend towards respective first and second ends of the main body 101 (i.e. outwardly) and may be perpendicular to the central longitudinal axis of their respective through-hole 102a,102b.

Again, the main body 101 may define one or more recesses to permit each pawl member 103,104a to move resiliently as described herein. Each recess is provided inboard of the part of the respective through-hole 102a,102b through which the elongate strip 11a is intended to pass.

An end wall of the main body 101 may include a cut-out and such cut-outs may be provided in both opposing end walls (as depicted, for example) and this may permit additional movement of the elongate strip 11a with respect to the relevant pawl member 103, 104a during use.

The elongate strip 11a may be inserted through the first and second through-holes 102a,b to form a loop to secure an item (e.g. a cable).

The through-holes 102a,102b,104b maybe generally parallel with respect to each other and may be of a similar width to each other.

A width of each through-hole 102a,102b,104b may be configured to permit the passage of an elongate strip 11a in the form of a tape. This width may be about 2mm, about 4mm, about 5mm, about 6mm, about 8mm, about 10mm, about 12mm, about 15mm, or between about 2mm and about 15mm. The elongate strip 11a may be a corresponding width but one width of through-hole 102a, 102b,104b may be suitable for use with a wide array of different widths of elongate strip 11a.

A kit may be provided including one or more cable ties 1 and one or more adaptors 100. The kit includes at least two different sizes of cable tie 1. In some embodiments, the kit includes at least two difference sizes of adaptor 100. Z The kit does not include cable ties 1 but includes a plurality of adaptors 100 (and this may include more than one different size of adaptor).

References to different sizes of adaptor 100 include references to adaptors 100 with different widths of through-hole 102a,102b, 104b (the external size of the main bodies 101 of such adaptors 100 may or may not be different).

Methods of use are described herein which may include a first step of securing a cable tie 1 to an item, severing the redundant tail portion 11a, and then use of the adaptor 100 as described herein.

Although some embodiments are depicted with dimensions (in mm) these dimensions are examples only.

When used in this specification and claims, the terms "comprises" and "comprising" and variations thereof mean that the specified features, steps or integers are included. The terms are not to be interpreted to exclude the presence of other features, steps or components.

The invention is defined by the appended claims.

## Claims

1. An elongate strip (1) and an adaptor (100) for use with the elongate strip (1), the adaptor comprising:
a main body (101) defining a first through-hole (102a) and a second through-hole (102b), each through-hole being configured to receive at least part of the elongate strip (1);
a first pawl (103) associated with the first through-hole (102a) and configured to engage at least part of the elongate strip (1); and
a retaining element associated with the second through-hole (102b) and configured to retain at least part of the elongate strip (1) such that the elongate strip (1) is securable in a loop with respect to the adaptor (100) around another item,
wherein the retaining element includes a third through-hole (104b) which does not include a pawl, wherein there is no elongate strip (1) integrally formed with the adaptor (100); **characterised in that** the third through-hole (104b) is configured to receive at least part of the elongate strip (1).

2. An elongate strip (1) and adaptor according to claim 1, wherein the retaining element includes:
a further pawl (104a) formed from a metal, optionally, wherein the retaining element includes the further pawl (104a), the elongate strip (1) includes an integrated ratchet gear rack (111), and the first and further pawls (103,104a) are configured to engage the integrated ratchet gear rack (111).

3. An elongate strip (1) and adaptor according to claim 2, wherein the first pawl (103) is located within the first through-hole (102a) and the further pawl (104a) is located within the second through-hole (102b).

4. An elongate strip (1) and adaptor according to claim 2 or 3, wherein the main body (101) and first pawl (103) are integrally formed, optionally the main body (101) and first pawl (103) are formed from a plastics material.

5. An elongate strip (1) and adaptor according to any of claims 2 to 3, wherein the first pawl (103) is formed from a metal, optionally the main body (101) is formed from a plastics material.

6. An elongate strip (1) and adaptor according to any preceding claim, wherein the elongate strip (1) is part of a cable tie.

7. A method including:
providing an elongate strip (1) and an adaptor (100) according to any of claims 1-5, and
securing the elongate strip (1) to the adaptor (100) by passing the elongate strip (1) through the first, second, and third through-holes (102a,102b,104b) to form a loop.

8. A method according to claim 7, wherein providing the elongate strip (1) includes providing a cable tie including an end member (12) defining a through-hole (121) and a tail portion (11), severing at least part of the tail portion (11) from the end member (12) and using the severed portion of the tail as the elongate strip (1).

## Patentansprüche

1. Länglicher Streifen (1) und Adapter (100) zur Verwendung mit dem länglichen Streifen (1), wobei der Adapter umfasst:
einen Hauptkörper (101), der ein erstes Durchgangsloch (102a) und ein zweites Durchgangsloch (102b) definiert, wobei jedes Durchgangsloch dafür konfiguriert ist, mindestens einen Teil des länglichen Streifens (1) aufzunehmen;
eine erste Sperrklinke (103), die mit dem ersten Durchgangsloch (102a) assoziiert und dafür konfiguriert ist, mindestens einen Teil des länglichen Streifens (1) in Eingriff zu nehmen; und
ein Rückhalteelement, das mit dem zweiten Durchgangsloch (102b) assoziiert und dafür konfiguriert ist, mindestens einen Teil des länglichen Streifens (1) zurückzuhalten, so dass der längliche Streifen (1) in einer Schlaufe in Bezug auf den Adapter (100) um einen anderen Gegenstand herum sicherbar ist,
wobei das Rückhalteelement ein drittes Durchgangsloch (104b) beinhaltet, das keine Sperrklinke beinhaltet, wobei kein länglicher Streifen (1) integral mit dem Adapter (100) gebildet ist;
**dadurch gekennzeichnet, dass**
das dritte Durchgangsloch (104b) dafür konfiguriert ist, mindestens einen Teil des länglichen Streifens (1) aufzunehmen.

2. Länglicher Streifen (1) und Adapter nach Anspruch 1, wobei das Rückhalteelement beinhaltet:
eine weitere Sperrklinke (104a), die aus einem Metall gebildet ist,
optional, wobei das Rückhalteelement die weitere Sperrklinke (104a) beinhaltet, der längliche Streifen (1) eine integrierte Ratschenzahnstange (111) beinhaltet und die erste und die weitere Sperrklinke (103, 104a) dafür konfiguriert sind, die integrierte Ratschenzahnstange (111) in Eingriff zu nehmen.

3. Länglicher Streifen (1) und Adapter nach Anspruch 2, wobei die erste Sperrklinke (103) innerhalb des ersten Durchgangslochs (102a) befindlich ist und die weitere Sperrklinke (104a) innerhalb des zweiten Durchgangslochs (102b) befindlich ist.

4. Länglicher Streifen (1) und Adapter nach Anspruch 2 oder 3, wobei der Hauptkörper (101) und die erste Sperrklinke (103) integral gebildet sind, optional, wobei der Hauptkörper (101) und die erste Sperrklinke (103) aus einem Kunststoffmaterial gebildet sind.

5. Länglicher Streifen (1) und Adapter nach einem der Ansprüche 2 bis 3, wobei die erste Sperrklinke (103) aus einem Metall gebildet ist, optional, wobei der Hauptkörper (101) aus einem Kunststoffmaterial gebildet ist.

6. Länglicher Streifen (1) und Adapter nach einem vorhergehenden Anspruch, wobei der längliche Streifen (1) Teil eines Kabelbinders ist.

7. Verfahren, beinhaltend:
Bereitstellen eines länglichen Streifens (1) und eines Adapters (100) nach einem der Ansprüche 1-5 und Sichern des länglichen Streifens (1) an dem Adapter (100) durch Hindurchführen des länglichen Streifens (1) durch das erste, zweite und dritte Durchgangsloch (102a, 102b, 104b), um eine Schlaufe zu bilden.

8. Verfahren nach Anspruch 7, wobei das Bereitstellen des länglichen Streifens (1) das Bereitstellen eines Kabelbinders mit einem ein Durchgangsloch (121) definierenden Endelement (12) und einem Schwanzabschnitt (11) beinhaltet, wodurch mindestens ein Teil des Schwanzabschnitts (11) von dem Endelement (12) abgetrennt und der abgetrennte Abschnitt des Endelements als der längliche Streifen (1) verwendet wird.

## Revendications

1. Une bande allongée (1) et un adaptateur (100) à utiliser avec la bande allongée (1), l'adaptateur comprenant :
un corps principal (101) définissant un premier trou traversant (102a) et un deuxième trou traversant (102b), chaque trou traversant étant configuré pour recevoir au moins une partie de la bande allongée (1) ;
un premier cliquet (103) associé au premier trou traversant (102a) et configuré pour se mettre en prise avec au moins une partie de la bande allongée (1) ; et
un élément de retenue associé au deuxième trou traversant (102b) et configuré pour retenir au moins une partie de la bande allongée (1) de telle sorte que la bande allongée (1) peut être fixée dans une boucle par rapport à l'adaptateur (100) autour d'un autre élément,
dans laquelle l'élément de retenue inclut un troisième trou traversant (104b) qui n'inclut pas de cliquet,
dans laquelle il n'y a pas de bande allongée (1) formée d'un seul tenant avec l'adaptateur (100) ;
**caractérisé en ce que**
le troisième trou traversant (104b) est configuré pour recevoir au moins une partie de la bande allongée (1).

2. Une bande allongée (1) et un adaptateur selon la revendication 1, dans laquelle l'élément de retenue inclut :
un autre cliquet (104a) formé à partir d'un métal,
en option, dans laquelle l'élément de retenue inclut l'autre cliquet (104a), la bande allongée (1) inclut une crémaillère à roue à rochet intégrée (111), et le premier et l'autre cliquets (103,104a) sont configurés pour se mettre en prise avec la crémaillère à roue à rochet intégrée (111).

3. Une bande allongée (1) et un adaptateur selon la revendication 2, dans laquelle le premier cliquet (103) est situé dans le premier trou traversant (102a) et l'autre cliquet (104a) est situé dans le deuxième trou traversant (102b).

4. Une bande allongée (1) et un adaptateur selon la revendication 2 ou 3, dans laquelle le corps principal (101) et le premier cliquet (103) sont formés d'un seul tenant, en option le corps principal (101) et le premier cliquet (103) sont formés à partir d'une matière plastique.

5. Une bande allongée (1) et un adaptateur selon l'une quelconque des revendications 2 à 3, dans laquelle le premier cliquet (103) est formé à partir d'un métal, en option le corps principal (101) est formé à partir d'une matière plastique.

6. Une bande allongée (1) et un adaptateur selon l'une quelconque des revendications précédentes, dans laquelle la bande allongée (1) fait partie d'un attache-câbles.

7. Un procédé consistant à :
fournir une bande allongée (1) et un adaptateur (100) selon l'une quelconque des revendications 1 à 5, et
fixer la bande allongée (1) à l'adaptateur (100) en passant la bande allongée (1) à travers les premier, deuxième et troisième trous traversants (102a,102b,104b) pour former une boucle.

8. Un procédé selon la revendication 7, dans lequel la fourniture de la bande allongée (1) consiste à fournir un attache-câbles incluant un élément d'extrémité (12) définissant un trou traversant (121) et une partie de queue (11), couper au moins une partie de la partie de queue (11) de l'élément d'extrémité (12) et utiliser la partie coupée de la queue en tant que bande allongée (1).
